# EUROPÄISCHE PATENTSCHRIFT

(11) **EP 2 086 805 B1**
(45) Veröffentlichungstag und Bekanntmachung des Hinweises auf die Patenterteilung: **30.03.2011**
(21) Anmeldenummer: 07820811.3
(22) Anmeldetag: 02.10.2007
(51) Int. Cl.: B60T 8/40, F04B 53/12

(54) **KOLBENPUMPE**
PISTON PUMP
POMPE À PISTON

(30) Priorität: 02.11.2006 DE 102006051589
(43) Veröffentlichungstag der Anmeldung: 12.08.2009
(73) Patentinhaber: Robert Bosch GmbH, 70442 Stuttgart (DE)
(72) Erfinder: ZIMMERMANN, Marc, 71720 Oberstenfeld (DE)
(86) Internationale Anmeldenummer: PCT/EP2007/060429
(87) Internationale Veröffentlichungsnummer: WO 2008/052856

(56) Entgegenhaltungen:
- WO-A-99/06698
- WO-A-2004/037624
- WO-A-2006/013142
- DE-A1-102004 044 967
- DE-A1-102006 000 054
- DE-U1-202005 002 954

## Beschreibung

### Stand der Technik

Die vorliegende Erfindung betrifft eine Kolbenpumpe zur Förderung eines Fluids mit einem verbesserten Aufbau, wobei die Kolbenpumpe insbesondere in Bremsanlagen von Fahrzeugen verwendet wird. Eine derartige Pumpe ist z. B. aus der DE 202005002954U1 bekannt.

Kolbenpumpen sind aus dem Stand der Technik in unterschiedlichen Ausgestaltungen bekannt. Bekannte Kolbenpumpen werden beispielsweise in Bremsanlagen von Fahrzeugen verwendet, welche einen aktiven Druckaufbau in Abhängigkeit von vorbestimmten Fahrsituationen ermöglichen. Derartige Systeme sind beispielsweise ABS-, ESP- oder TCS-Systeme. Ansprechverhalten und Druckaufbau derartiger Kolbenpumpen müssen sehr gut sein, um schnellstmöglich einen Regeleingriff im Bremssystem ausführen zu können.

Kolbenpumpen werden auch in Bremsanlagen bei sogenannten Parkbremsen (Handbremsen) verwendet. Durch die Verwendung derartiger Kolbenpumpen in Fahrzeugen ergeben sich Anforderungen hinsichtlich einer kostengünstigen Herstellung sowie eines möglichst kleinen Bauraums. Die bekannten Kolbenpumpen sind jedoch relativ teuer in der Herstellung und benötigen einen relativ großen Bauraum. Häufig verwenden die bekannten Kolbenpumpen auch einen Stufenkolben, um einen Einsatz als Saugpumpe zu ermöglichen. Für derartige Stufenkolben ist jedoch ein sehr aufwendiges und teures Einstechschleifen notwendig.

### Vorteile der Erfindung

Die erfindungsgemäße Kolbenpumpe mit den Merkmalen des Patentanspruchs 1 weist demgegenüber den Vorteil auf, dass sie sehr einfach aufgebaut ist. Dadurch kann sie besonders kostengünstig hergestellt werden, da sie insbesondere einfach herzustellende einzelne Bauteile aufweist. Ferner kann die erfindungsgemäße Kolbenpumpe einen sehr kurzen Saugbereich aufweisen, so dass ein verbessertes Saugverhalten möglich ist. Die erfindungsgemäße Kolbenpumpe kann dabei die Funktion eines Stufenkolbens aufweisen, ohne dass der Kolben aufwendig, insbesondere mittels eines Einstechschleifens, hergestellt werden muss. Dies wird erfindungsgemäß dadurch erreicht, dass die Kolbenpumpe gemäß der Erfindung einen Kolben mit wenigstens einer Querbohrung und einer Sackloch-Längsbohrung sowie ein Plattenelement mit einer Öffnung aufweist. Das Plattenelement ist am Kolben an einer Mündung der Sackloch-Längsbohrung zu einem Druckraum der Kolbenpumpe angeordnet. Die Kolbenpumpe umfasst ferner ein Einlassventil und ein Auslassventil, wobei der Druckraum zwischen dem Einlassventil und dem Auslassventil angeordnet ist. Ein Dichtsitz des Einlassventils ist dabei am Plattenelement gebildet. Somit ist das Einlassventil unmittelbar am Plattenelement angeordnet und ein Schließelement des Einlassventils schließt bzw. gibt die Öffnung des Plattenelements frei. Das Einlassventil umfasst ferner eine Halteeinrichtung, um ein Einlassventilvorspannelement zu halten. Dadurch wird ein besonders kompaktes Einlassventil bereitgestellt. Weiter umfasst die Halteeinrichtung des Einlassventils einen Dichtbereich welche an einem Zylinder des Druckraums und am Plattenelement abdichtet. Der Drihtbereich dichtet dabei am Plattenelement in Axialrichtung des Kolbens ab. Darüber hinaus ist die Halteeinrichtung des Einlassventils am Plattenelement mittels eines ringförmigen Fortsatzes fixiert. Ferner umfasst das Plattenelement einen integral gebildeten ringförmigen Bund, welcher einen druckraumseitigen Endbereich des Kolbens umgreift. Dadurch wird eine besonders einfache Befestigung des Plattenelements am Kolben realisiert Die Unteransprüche zeigen bevorzugte Weiterbildungen der Erfindung. Das Plattenelement ist besonders bevorzugt kraftschlüssig am Kolben fixiert.
Dies kann beispielsweise mittels einer Presspassung zwischen Kolben und ringförmigem Bund, oder Verschweißen oder Verkleben erfolgen. Es sei angemerkt, dass alternativ das Plattenelement nur lose am Kolben aufliegt. Dadurch ergibt sich eine Toleranzunabhängigkeit, wodurch insbesondere die Herstellkosten weiter reduziert werden können.

Eine besonders bevorzugte und einfache Montage ergibt sich, wenn das Plattenelement lose am Kolben angeordnet ist.

Vorzugsweise umfasst die Halteeinrichtung des Einlassventils einen Käfig zum Halten eines Einlassventil-Vorspannelements.

Weiter bevorzugt ist ein Außendurchmesser des Plattenelements größer als ein Außendurchmesser des Kolbens. Hierdurch kann insbesondere die Funktion eines Stufenkolbens realisiert werden, wobei ein aufwendiges und teueres Einstichschleifen, wie bei einem Stufenkolben notwendig, entfallen kann. Durch die unterschiedlichen Durchmesser kann ferner eine gezielte Druckübersetzung erfolgen.

### Zeichnung

Nachfolgend werden bevorzugte Ausführungsbeispiele der Erfindung unter Bezugnahme auf die begleitende Zeichnung beschrieben. In der Zeichnung ist:
- Figur 1: eine schematische Schnittansicht einer Kolbenpumpe gemäß einem Beispiel und
- Figur 2: eine schematische Schnittansicht einer Kolbenpumpe gemäß einem Ausführungsbeispiel der vorliegenden Erfindung.

### Bevorzugte Ausführungsformen der Erfindung

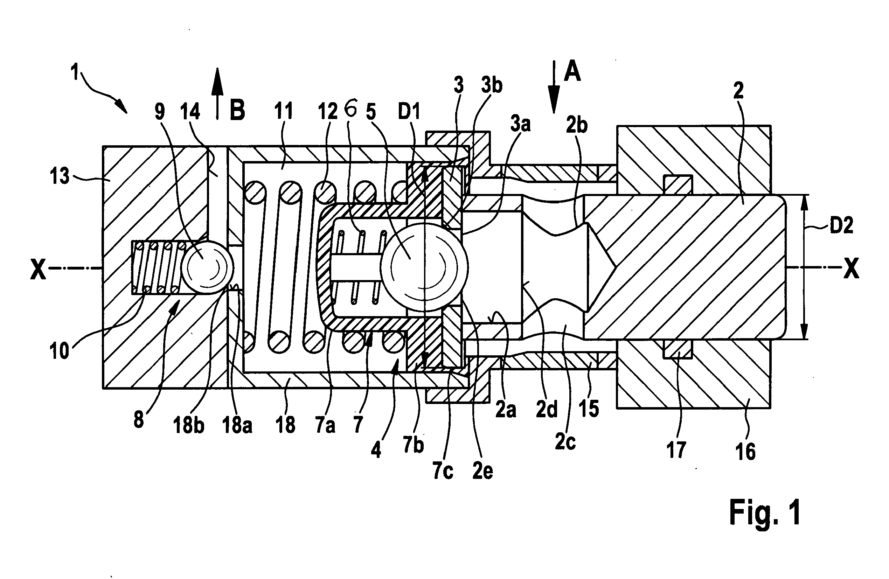

Nachfolgend wird unter Bezugnahme auf Figur 1 eine Kolbenpumpe 1 gemäß einem Beispiel im Detail beschrieben.

Die Kolbenpumpe 1 umfasst einen zylinderförmigen Kolben 2, welcher einstückig aus einer Zylinderrolle gefertigt ist. Der Kolben 2 umfasst einen Sackloch-Längsbohrung 2a sowie mehrere Querbohrungen 2b, 2c, 2d. In diesem Ausführungsbeispiel sind vier Querbohrungen vorgesehen, wobei in der Schnittansicht von Figur 1 nur drei Bohrungen erkennbar sind. Eine Mündung 2e der Sackloch-Längsbohrung 2a ist am druckraumseitigen Ende des Kolbens 2 angeordnet. Die Kolbenpumpe 1 umfasst ferner ein Plattenelement 3, welches am druckraumseitigen Ende des Kolbens 2 angeordnet ist. Das Plattenelement 3 ist eine flache scheibenförmige, ringförmige Platte mit einer Durchgangsbohrung 3a. Am Plattenelement 3 ist ein Einlassventil 4 angeordnet. Ferner umfasst die Kolbenpumpe 1 ein Auslassventil 8 und einen zwischen dem Einlassventil 4 und dem Auslassventil 8 angeordneten Druckraum 11.

Das Einlassventil 4 umfasst ein Schließelement 5, welches in diesem Ausführungsbeispiel eine Kugel ist, sowie eine Vorspannfeder 6. Die Vorspannfeder 6 stützt sich gegen eine Halteeinrichtung 7 ab. Die Halteeinrichtung 7 umfasst einen Käfig 7a sowie einen Dichtbereich 7b. Am Dichtbereich 7b ist ferner ein Fortsatz 7c vorgesehen, welcher das Plattenelement 3 in radialer Richtung des Plattenelements umgreift Die Halteeinrichtung 7 ist aus einem Kunststoffmaterial hergestellt, wobei der Käfig 7a im Wesentlichen aus vier parallel zur Axialrichtung X-X der Kolbenpumpe liegenden Armen gebildet ist, zwischen welchen Fluid hindurchströmen kann, wenn das Einlassventil 4 geöffnet ist. Der Käfig 7a ist somit im Wesentlichen topfförmig mit Durchgangsbereichen gebildet, wobei sich die Vorspannfedern 6 am inneren Topfbodenbereich abstützen. Im Druckraum 11 ist ferner eine Rückstellfeder 12 zur Rückstellung des Kolbens 2 vorgesehen. Wie in Figur 1 gezeigt, greift die Rückstellfeder 12 dabei an der Halteeinrichtung 7, genauer am Dichtbereich 7b der Halteeinrichtung 7 an. Der Kolben 2 wird beispielsweise durch einen Exzenter (nicht gezeigt) angetrieben und bewegt sich linear in Axialrichtung X-X. Die Rückstellfeder 12 stützt sich dabei an einem Zylinderbauteil 18 ab, welches gleichzeitig auch eine Begrenzung des Druckraumes 11 bildet. Das Zylinderbauteil 18 weist eine topfförmige Form mit einer Durchgangsöffnung 18a im Boden auf, welche mittels des Auslassventils 8 verschlossen wird. Das Auslassventil 8 umfasst ein Schließelement 9 in Form einer Kugel und eine Vorspannfeder 10 zum Vorspannen des Schließelements 9 gegen einen am Ausgang der Durchgangsbohrung 18a gebildeten Dichtsitz 18b. Die Rückstellfeder 12 ist dabei in einer in einem Deckel 13 der Kolbenpumpe gebildeten Ausnehmung angeordnet. Ein durch den Deckel 13 geführter Auslasskanal ist mit dem Bezugszeichen 14 gekennzeichnet. Ein Filter 15 ist zur Filterung von angesaugtem Fluid radial vom Kolben 2 angeordnet. Der Kolben 2 selbst ist in einem Gehäuse 16 geführt und wird mittels einer Dichtung 17 gegenüber dem Kolbenantrieb abgedichtet.

Die Funktion der Kolbenpumpe ist dabei wie folgt. Fluid wird durch den Filter 15 in Richtung des Pfeils A radial durch die Querbohrungen 2b, 2c, 2d und die Sackloch-Längsbohrung bei geöffnetem Einlassventil 4 in den Druckraum 11 angesaugt. In der Ansaugphase bewegt sich der Kolben 2 dabei in Figur 1 nach rechts, wobei insbesondere die Rückstellfeder 12 eine entsprechende Kraft über die Halteeinrichtung 7 und das Plattenelement 3 auf den Kolben 2 ausübt. Am unteren Totpunkt kehrt sich die Bewegungsrichtung des Kolbens 2 um und die Druckaufbauphase der Kolbenpumpe beginnt. Hierbei wird das Einlassventil 4 geschlossen und das Auslassventil 8 ist ebenfalls noch geschlossen. Dieser Zustand ist in Figur 1 gezeigt. Der Kolben 2 wird dabei gegen die Federkraft 12 in Richtung auf das Auslassventil 8 zubewegt, wobei Druck im Druckraum 11 aufgebaut wird. Das Auslassventil 8 bleibt dabei so lange geschlossen, bis ein Druck im Druckraum 11 größer ist als ein im Auslasskanal 14 herrschender Gegendruck sowie eine Federkraft der Vorspannfeder 10 des Auslassventils 8. Wenn im Druckraum 11 dieser Öffnungsdruck für das Auslassventil 8 erreicht ist, öffnet das Auslassventil, so dass unter Druck stehendes Fluid in den Auslasskanal 14 von dort in Richtung des Pfeils B zu weiteren Verbrauchern, wie z.B. Radbremsen, geführt werden kann.

Wie aus Figur 1 ersichtlich ist, weist die Kolbenpumpe 1 dabei einen sehr kompakten, insbesondere in Axialrichtung X-X kurzen Aufbau auf. Das Plattenelement 3 ist dabei am Kolben 2 beispielsweise mittels Kleben fixiert. Das Plattenelement 3 kann einfach beispielsweise als Stanzteil oder als Kaltschlagteil hergestellt werden. Ein Ventilsitz 3b des Einlassventils 4 ist dabei am Plattenelement 3 gebildet. Das Plattenelement 3 ist dabei besonders bevorzugt aus Stahl oder aus einem Leichtmetall hergestellt. Es sei ferner angemerkt, dass das Plattenelement 3 alternativ auch lose auf das druckraumseitige Ende des Kolbens 2 aufgelegt sein kann. Dies ist möglich, da der Bereich zwischen dem Plattenelement 3 und dem Kolben 2 keine Dichtfunktion übernehmen muss, da im Kolbeninneren und im Kolbenäußeren der gleiche Ansaugdruck herrscht.

Der Kolben 2 selbst kann beispielsweise aus einer einfachen Rolle hergestellt werden. Da das Plattenelement 3 einen Durchmesser D1 aufweist, welcher größer ist als ein Durchmesser D2 des Kolbens 2, kann die Kolbenpumpe 1 die Funktion einer Stufenpumpe übernehmen, ohne dass der Kolben selbst als Stufenkolben ausgebildet ist. Hierdurch kann insbesondere auf ein teures Einstechschleifen am Kolben verzichtet werden. Da ferner die Sackloch-Längsbohrung 2a im Kolben 2 einen sehr großen Durchmesser aufweist und die Mündung 2c nahe an den Querbohrungen 2b, 2c, 2d angeordnet ist, kann ferner ein verbessertes Saugverhalten der Kolbenpumpe 1 erreicht werden.

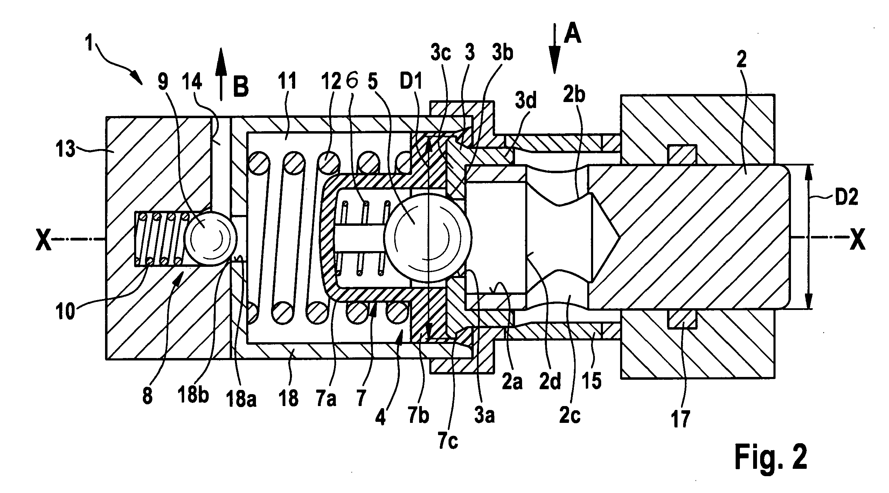

Nachfolgend wird unter Bezugnahme auf die Figur 2 eine Kolbenpumpe gemäß einem ersten Ausführungsbeispiel der Erfindung beschrieben. Dabei sind gleiche bzw. funktional gleiche Teile mit den gleichen Bezugszeichen wie im ersten Beispiel bezeichnet.

Das efindungsgemäβe Ausführungsbeispiel entspricht im Wesentlichen dem vorhergehend beschriebenen Beispiel, wobei im Unterschied dazu das Plattenelement 3 modifiziert ist. Wie in Figur 2 gezeigt, ist das Plattenelement 3 des zweiten Ausführungsbeispiels ein im Wesentlichen topfförmiges Element mit einem scheibenartigen Bodenbereich 3c und einem ringförmigen Bund 3d. Im Bodenbereich 3c ist wie im ersten Ausführungsbeispiel eine Durchgangsbohrung 3a und ein Ventilsitz 3b für das Einlassventil 4 gebildet. Das Plattenelement 3 des zweiten Ausführungsbeispiels ist aus Metall hergestellt und vorzugsweise als Tiefziehteil hergestellt. Dadurch kann der ringförmige Bund 3d einfach hergestellt werden.

Das Plattenelement 3 ist am Kolben 2 mittels einer Presspassung fixiert. Hierbei hält der ringförmige Bund 3d das Plattenelement 3 am druckraumseitigen Ende des Kolbens 2. Ein Durchmesser D1 des Plattenelements 3 ist größer als ein Durchmesser D2 des Kolbens 2. Dadurch wird eine Wirkung eines Stufenkolbens erreicht, wobei der Kolben 2 selbst als zylindrischer Kolben mit gleich bleibendem Durchmesser vorgesehen sein kann. Ein Dichtbereich 7b der Halteeinrichtung 7 umgreift wieder das Platten-element 3 durch den ringförmigen Fortsatz 7c. Ansonsten entspricht dieses erfindungsgemäβe Ausführungsbeispiel dem Beispiel nach Figur 1 so dass auf die dort gegebene Beschreibung verwiesen werden kann.

## Patentansprüche

1. Kolbenpumpe, umfassend einen Kolben (2) mit wenigstens einer Querbohrung (2b, 2c, 2d) und einer Sackloch-Längsbohrung (2a), ein Plattenelement (3) mit einer Öffnung (3a), wobei das Plattenelement (3) am Kolben (2) an einer Mündung (2e) der Sackloch-Längsbohrung (2a) angeordnet ist, ein Einlassventil (4), ein Auslassventil (8) und einen zwischen dem Einlassventil (4) und dem Auslassventil (8) angeordneten Druckraum (11), wobei das Einlassventil (4) ein Vorspannelement (6), ein Schließelement (5) und einen Dichtsitz (3b) umfasst, und wobei der Dichtsitz (3b) am Plattenelement (3) gebildet ist, wobei das Einlassventil (4) eine Halteeinrichtung (7) umfasst, um das Vorspannelement (6) des Einlassventils (4) zu halten und die Halteeinrichtung (7) einen Dichtbereich (7b) umfasst, welcher an einem Zylinder (18) und am Plattenelement (3) abdichtet, wobei das Plattenelement (3) einen scheibenartigen Bodenbereich (3c) und einen integral gebildeten, ringförmigen Bund (3d) umfasst, welcher ein druckraumseitiges Ende des Kolbens (2) umgreift, und wobei die Halteeinrichtung (7) einen ringförmigen Fortsatz (7c) umfasst, welcher das Plattenelement (3) umgreift und die Halteeinrichtung (7) am Plattenelement (3) fixiert ist.

2. Kolbenpumpe nach Anspruch 1, **dadurch gekennzeichnet, dass** das Plattenelement (3) kraftschlüssig, insbesondere mittels einer Presspassung oder mittels Verschweißen oder mittels Verkleben, am Kolben (2) fixiert ist.

3. Kolbenpumpe nach Anspruch 1, **dadurch gekennzeichnet, dass** das Plattenelement (3) lose am Kolben (2) angeordnet ist.

4. Kolbenpumpe nach Anspruch 1, **dadurch gekennzeichnet, dass** das Plattenelement (3) mit dem ringförmigen Bund (3d) ein Tiefziehteil ist.

5. Kolbenpumpe nach einem der vorhergehenden Ansprüche, **dadurch gekennzeichnet, dass** die Halteeinrichtung (7) einen Käfig (7a) zum Halten des Vorspannelements (6) des Einlassventils (4) umfasst.

6. Kolbenpumpe nach einem der vorhergehenden Ansprüche, **dadurch gekennzeichnet, dass** ein Außendurchmesser (D1) des Plattenelements (3) größer ist als ein Außendurchmesser (D2) des Kolbens (2).

7. Kolbenpumpe nach der vorhergehenden Ansprüche, **gekennzeichnet durch** einen zylindrischen Kolben (2) mit gleichbleibendem Durchmesser.

## Claims

1. Piston pump, comprising a piston (2) with at least one transverse bore (2b, 2c, 2d) and a blind-hole longitudinal bore (2a), a plate element (3) with an opening (3a), wherein the plate element (3) is arranged on the piston (2) at a mouth (2e) of the blind-hole longitudinal bore (2a), an inlet valve (4), an outlet valve (8) and a pressure space (11) arranged between the inlet valve (4) and the outlet valve (8), wherein the inlet valve (4) comprises a prestressing element (6), a closing element (5) and a sealing seat (3b), and wherein the sealing seat (3b) is formed on the plate element (3), wherein the inlet valve (4) comprises a retaining device (7) in order to retain the prestressing element (6) of the inlet valve (4), and the retaining device (7) comprises a sealing region (7b) which provides sealing at a cylinder (18) and at the plate element (3), wherein the plate element (3) comprises a disc-like base region (3c) and an integrally formed, annular collar (3d) which engages around a pressure-space end of the piston (2), and wherein the retaining device (7) comprises an annular extension (7c) which engages around the plate element (3), and the retaining device (7) is fixed to the plate element (3).

2. Piston pump according to Claim 1, **characterized in that** the plate element (3) is fixed to the piston (2) non-positively, in particular by means of a press fit or by means of welding or by means of adhesive bonding.

3. Piston pump according to Claim 1, **characterized in that** the plate element (3) is arranged loosely on the piston (2) .

4. Piston pump according to Claim 1, **characterized in that** the plate element (3) with the annular collar (3d) is a deep-drawn part.

5. Piston pump according to one of the preceding claims, **characterized in that** the retaining device (7) comprises a cage (7a) for retaining the prestressing element (6) of the inlet valve (4).

6. Piston pump according to one of the preceding claims, **characterized in that** an outside diameter (D1) of the plate element (3) is larger than an outside diameter (D2) of the piston (2).

7. Piston pump according to one of the preceding claims, **characterized by** a cylindrical piston (2) with an unchanging diameter.

## Revendications

1. Pompe à piston, comprenant un piston (2) avec au moins un alésage transversal (2b, 2c, 2d) et un alésage longitudinal borgne (2a), un élément de plaque (3) avec une ouverture (3a), l'élément de plaque (3) étant disposé sur le piston (2) au niveau d'une embouchure (2e) de l'alésage longitudinal borgne (2a), une soupape d'admission (4), une soupape de sortie (8) et un espace de pression (11) disposé entre la soupape d'admission (4) et la soupape de sortie (8), la soupape d'admission (4) comprenant un élément de précontrainte (6), un élément de fermeture (5) et un siège d'étanchéité (3b), et le siège d'étanchéité (3b) étant formé sur l'élément de plaque (3), la soupape d'admission (4) comprenant un, dispositif de retenue (7) afin de retenir l'élément de précontrainte (6) de la soupape d'admission (4), et le dispositif de retenue (7) comprenant une région d'étanchéité (7b) qui réalise l'étanchéité au niveau d'un cylindre (18) et de l'élément de plaque (3), l'élément de plaque (3) comprenant une région de fond en forme de disque (3c) et un épaulement annulaire (3d) formé intégralement, qui vient en prise autour d'une extrémité du piston (2) du côté de l'espace de pression, et le dispositif de retenue (7) comprenant une saillie annulaire (7c) qui vient en prise autour de l'élément de plaque (3) et qui fixe le dispositif de retenue (7) sur l'élément de plaque (3).

2. Pompe à piston selon la revendication 1, **caractérisée en ce que** l'élément de plaque (3) est fixé par engagement par force, notamment au moyen d'un ajustement serré, ou par soudage, ou par collage, au piston (2).

3. Pompe à piston selon la revendication 1, **caractérisée en ce que** l'élément de plaque (3) est disposé lâchement sur le piston (2).

4. Pompe à piston selon la revendication 1, **caractérisée en ce que** l'élément de plaque (3) avec l'épaulement annulaire (3d) constitue une partie emboutie.

5. Pompe à piston selon l'une quelconque des revendications précédentes, **caractérisée en ce que** le dispositif de retenue (7) comprend une cage (7a) pour retenir l'élément de précontrainte (6) de la soupape d'admission (4).

6. Pompe à piston selon l'une quelconque des revendications précédentes, **caractérisée en ce qu'**un diamètre extérieur (D1) de l'élément de plaque (3) est supérieur à un diamètre extérieur (D2) du piston (2).

7. Pompe à piston selon l'une quelconque des revendications précédentes, **caractérisée par** un piston cylindrique (2) de diamètre uniforme.
